# FASCICULE DE BREVET EUROPEEN

(11) **EP 3 973 238 B1**
(45) Date de publication et mention de la délivrance du brevet: **22.10.2025**
(21) Numéro de dépôt: 20729959.5
(22) Date de dépôt: 18.05.2020
(51) Int. Cl.: F28D 9/00, B60H 1/00, B60K 1/00, F28D 21/00

(54) **ECHANGEUR DE CHALEUR MONOBLOC COMPRENANT AU MOINS DEUX BLOCS D'ÉCHANGE DE CHALEUR COMPORTANT CHACUN UN CHEMIN DE CIRCULATION D'UN FLUIDE RÉFRIGÉRANT ET UN CHEMIN DE CIRCULATION D'UN LIQUIDE CALOPORTEUR**
MONOBLOCKWÄRMETAUSCHER MIT MINDESTENS ZWEI WÄRMETAUSCHERBLÖCKEN, DIE JEWEILS EINE ZIRKULATIONSBAHN FÜR EIN KÄLTEMITTEL UND EINE ZIRKULATIONSBAHN FÜR EINE WÄRMETRANSFERFLÜSSIGKEIT UMFASSEN
MONOBLOCK HEAT EXCHANGER COMPRISING AT LEAST TWO HEAT EXCHANGE BLOCKS, EACH COMPRISING A CIRCULATION PATH FOR A REFRIGERANT AND A CIRCULATION PATH FOR A HEAT TRANSFER LIQUID

(30) Priorité: 21.05.2019 FR 1905304
(43) Date de publication de la demande: 30.03.2022
(73) Titulaire: VALEO SYSTEMES THERMIQUES, 78320 Le Mesnil Saint-Denis (FR)
(72) Inventeur: BENOUALI, Jugurtha, 78322 LE MESNIL SAINT-DENIS CEDEX (FR); DENOUAL, Christophe, 72210 LA SUZE SUR SARTHE (FR)
(74) Mandataire: Valeo Powertrain Systems
(86) Numéro de dépôt international: PCT/EP2020/063758
(87) Numéro de publication internationale: WO 2020/234212

(56) Documents cités:
- EP-A1- 1 132 694
- EP-A1- 2 784 425
- EP-A2- 2 420 763
- DE-T5- 112013 000 832
- DE-T5- 112016 003 562
- FR-A1- 2 989 635

## Description

La présente invention concerne un échangeur de chaleur fluide réfrigérant / liquide caloporteur. Un tel échangeur selon le préambule de la revendication 1 est connu de EP 2 420 763. La présente invention concerne aussi une installation comprenant un circuit de fluide réfrigérant, un circuit de liquide caloporteur et un tel échangeur de chaleur fluide réfrigérant / liquide caloporteur. La présente invention concerne aussi un procédé de refroidissement d'un dispositif de stockage électrique d'un véhicule automobile au moyen d'une telle installation.

Dans le domaine automobile, il est courant d'avoir à modifier une température d'un composant, tel qu'un moteur électrique, une batterie, un dispositif de stockage de calories et/ou de frigories ou analogue. A cet effet, le véhicule automobile est équipé d'une installation qui comprend un circuit de fluide réfrigérant à l'intérieur duquel circule un fluide réfrigérant et un circuit de liquide caloporteur à l'intérieur duquel circule un liquide caloporteur. Le circuit de fluide réfrigérant comprend un compresseur pour comprimer le fluide réfrigérant, un échangeur thermique pour refroidir le fluide réfrigérant à pression constante, un organe de détente pour permettre une détente du fluide réfrigérant et un échangeur de chaleur fluide réfrigérant / liquide caloporteur qui est agencé pour permettre un transfert thermique entre le fluide réfrigérant et le liquide caloporteur. Le circuit de liquide caloporteur comprend une pompe et un échangeur thermique apte à modifier une température du composant.

L'échangeur de chaleur fluide réfrigérant / liquide caloporteur est un échangeur comprenant des plaques empilées et jointes ensemble pour former des tubes délimitant des canaux de circulation du fluide réfrigérant ou du liquide caloporteur. La plaque comprend quatre orifices pour permettre une arrivée et une sortie du fluide réfrigérant, et une arrivée et une sortie du liquide caloporteur à l'intérieur des canaux de circulation situés de part et d'autre d'une même plaque.

L'échangeur de chaleur fluide réfrigérant / liquide caloporteur est bordé longitudinalement par une première joue et une deuxième joue entre lesquelles les plaques sont disposées. La première joue est pourvue de quatre passages pour permettre une arrivée et une sortie du fluide réfrigérant, et une arrivée et une sortie du liquide caloporteur à l'intérieur des canaux de circulation situés de part et d'autre d'une même plaque. La deuxième joue est exempte de passage.

Il est courant d'avoir à refroidir le composant selon des modalités distinctes, notamment lorsque celui-ci comprend au moins une batterie électrique. En effet, il est nécessaire de refroidir la batterie électrique lors de son chargement au cours duquel la batterie électrique tend à s'échauffer. La batterie électrique peut être rechargée en mode charge rapide dans lequel un temps de charge est court et un courant électrique de charge est élevé, ou bien en mode charge normale dans lequel le temps de charge est long et le courant électrique de charge est faible. Or, l'échauffement de la batterie électrique est globalement proportionnel au courant électrique de charge.

Ainsi, il est courant d'avoir à refroidir la batterie électrique en mode de charge rapide dans lequel la batterie électrique dissipe une quantité importante de chaleur nécessitant qu'une puissance de refroidissement fournie par l'échangeur de chaleur soit également importante. Il est aussi courant d'avoir à refroidir la batterie électrique en mode de charge normale dans lequel la batterie électrique dissipe une faible quantité de chaleur, qu'une puissance de refroidissement notablement inférieure à celle nécessaire en mode charge rapide suffit à dissiper.

Pour faire face à ces deux modalités distinctes de fonctionnement, l'échangeur de chaleur fluide réfrigérant / liquide caloporteur est habituellement configuré pour fournir la puissance de refroidissement élevée qui est nécessaire lorsque la batterie électrique est en mode de charge rapide. Autrement dit, l'échangeur de chaleur fluide réfrigérant / liquide caloporteur est dimensionné et configuré pour fournir une puissance de refroidissement élevée, correspondant à celle nécessaire pour dissiper la chaleur fournie par la batterie en mode charge rapide.

Or, et paradoxalement, il apparait qu'un échangeur de chaleur fluide réfrigérant / liquide caloporteur ainsi configuré présente un rendement de refroidissement dégradé lorsque la puissance de refroidissement demandée est faible. Autrement dit, il apparait que l'échangeur de chaleur fluide réfrigérant / liquide caloporteur ainsi configuré refroidit moins bien la batterie électrique en mode charge normale que cette même batterie électrique en mode charge rapide.

Un but de la présente invention est de proposer un échangeur de chaleur fluide réfrigérant / liquide caloporteur configuré pour fournir efficacement et rapidement une puissance de refroidissement adaptée en fonction de modalités variées de fonctionnement de la batterie électrique.

La présente invention vient améliorer la situation, en proposant un échangeur de chaleur fluide réfrigérant / liquide caloporteur présentant les caractéristiques techniques de la revendication 1.

L'échangeur de chaleur fluide réfrigérant / liquide caloporteur comprend avantageusement l'une quelconque au moins des caractéristiques techniques suivantes, prises seules ou en combinaison :
- l'échangeur de chaleur fluide réfrigérant / liquide caloporteur est monobloc dans le sens où les blocs d'échange de chaleur constitutifs de l'échangeur de chaleur ne peuvent être dissociés l'un de l'autre sans entraîner une destruction de l'un au moins des blocs d'échange de chaleur,
- l'échangeur de chaleur fluide réfrigérant / liquide caloporteur et ses blocs d'échange de chaleur sont d'un seul tenant et ne peuvent fonctionner après une dissociation des blocs d'échange de chaleur entre eux,
- les chemins de circulation du fluide réfrigérant et les chemins de circulation du liquide caloporteur sont agencés de manière à permettre un échange de calories entre le fluide réfrigérant destiné à circuler à l'intérieur des chemins de circulation du fluide réfrigérant et le liquide caloporteur prévu pour circuler à l'intérieur des chemins de circulation du liquide caloporteur, les chemins de circulation étant indifféremment logés à l'intérieur du premier bloc d'échange de chaleur ou du deuxième bloc d'échange de chaleur,

- un premier volume du premier bloc d'échange de chaleur est compris entre 50% et 70% d'un volume total de l'échangeur de chaleur fluide réfrigérant / liquide caloporteur monobloc,
- un deuxième volume du deuxième bloc d'échange de chaleur est compris entre 30% et 50% du volume total de l'échangeur de chaleur fluide réfrigérant / liquide caloporteur monobloc,
- le premier bloc d'échange de chaleur et le deuxième bloc d'échange de chaleur sont longitudinalement aboutés par l'intermédiaire de la plaque de séparation,
- la plaque de séparation est équipée de moyens de centrage du premier bloc d'échange de chaleur et du deuxième bloc d'échange de chaleur sur la plaque de séparation,
- les moyens de centrage comprennent au moins une pluralité de bossages,
- les bossages équipent les deux faces de la plaque de séparation,
- chaque bossage comporte un sommet qui est destiné à être brasé sur l'un quelconque des blocs d'échange de chaleur,
- les moyens de fixation permettent une fixation de l'échangeur de chaleur fluide réfrigérant / liquide caloporteur sur une pièce de son environnement,
- les moyens de fixation comprennent au moins une ouverture équipant une zone de la plaque de séparation surplombant l'un quelconque des flancs et/ou des côtés de l'échangeur de chaleur fluide réfrigérant / liquide caloporteur,
- l'échangeur de chaleur fluide réfrigérant / liquide caloporteur s'étend longitudinalement entre une première joue et une deuxième joue, la première joue étant pourvue de quatre passages, dont un premier passage, un deuxième passage, un troisième passage et un quatrième passage, et la deuxième joue étant pourvue de quatre passages, dont un cinquième passage, un sixième passage, un septième passage et un huitième passage,
- le premier bloc d'échange de chaleur est longitudinalement bordé d'un côté par la première joue et de l'autre côté par la plaque de séparation,
- le deuxième bloc d'échange de chaleur est longitudinalement bordé d'un côté par la plaque de séparation et de l'autre côté par la deuxième joue,
- le premier passage et le deuxième passage sont constitutifs du premier chemin de circulation du fluide réfrigérant, le troisième passage et le quatrième passage sont constitutifs du premier chemin de circulation du liquide caloporteur, le cinquième passage et le sixième passage sont constitutifs du deuxième chemin de circulation du fluide réfrigérant, et le septième passage et le huitième passage sont constitutifs du deuxième chemin de circulation du liquide caloporteur,
- le premier chemin de circulation du fluide réfrigérant et le premier chemin de circulation du liquide caloporteur sont conformés en « U »,
- le deuxième chemin de circulation du fluide réfrigérant et le deuxième chemin de circulation du liquide caloporteur sont conformés en « U »,
- le premier passage et le quatrième passage sont constitutifs du premier chemin de circulation du fluide réfrigérant, le deuxième passage et le troisième passage sont constitutifs du premier chemin de circulation du liquide caloporteur, le cinquième passage et le huitième passage sont constitutifs du deuxième chemin de circulation du fluide réfrigérant, et le sixième passage et le septième passage sont constitutifs du deuxième chemin de circulation du liquide caloporteur,
- le premier chemin de circulation du fluide réfrigérant et le premier chemin de circulation du liquide caloporteur sont conformés en « I »,
- le deuxième chemin de circulation du fluide réfrigérant et le deuxième chemin de circulation du liquide caloporteur sont conformés en « I »,
- l'échangeur de chaleur fluide réfrigérant / liquide caloporteur est un échangeur à plaques comprenant la plaque de séparation et des plaques d'échange qui sont assemblées entre elles par brasage,
- le premier bloc d'échange de chaleur, le deuxième bloc d'échange de chaleur et la plaque de séparation sont solidarisés par l'intermédiaire d'un moyen d'assemblage mécanique,
- le moyen d'assemblage mécanique comprend des moyens d'assemblage par vissage au moyen de vis, d'écrou ou analogue, par clippage, par emboîtement ou analogue,
- les plaques d'échange constitutives du premier bloc d'échange de chaleur sont identiques aux plaques d'échange constitutives du deuxième bloc d'échange de chaleur,
- les plaques d'échange sont des plaques d'échange de premier type destinées à conformer l'échangeur chaleur fluide réfrigérant / liquide caloporteur en échangeur de chaleur en « U »,
- les plaques d'échange sont des plaques d'échange de deuxième type destinées à conformer l'échangeur chaleur fluide réfrigérant / liquide caloporteur en échangeur de chaleur en « I »,

La présente invention a aussi pour objet une installation de traitement thermique d'un composant équipant un véhicule automobile, l'installation comprenant un circuit de fluide réfrigérant, un circuit de liquide caloporteur et un tel échangeur de chaleur fluide réfrigérant / liquide caloporteur, le circuit de fluide réfrigérant comprenant une première branche de circulation du fluide réfrigérant et une deuxième branche de circulation du fluide réfrigérant qui sont agencées en parallèle l'une de l'autre, le circuit de liquide caloporteur comprenant une première branche de circulation du liquide caloporteur et une deuxième branche de circulation du liquide caloporteur qui sont agencées en parallèle l'une de l'autre, dans laquelle le premier chemin de circulation du fluide réfrigérant est constitutif de la première branche de circulation du fluide réfrigérant, le premier chemin de circulation du liquide caloporteur est constitutif de la première branche de circulation du liquide caloporteur, le deuxième chemin de circulation du fluide réfrigérant est constitutif de la deuxième branche de circulation du fluide réfrigérant et le deuxième chemin de circulation du liquide caloporteur est constitutif de la deuxième branche de circulation du liquide caloporteur,
- le premier bloc d'échange de chaleur est installé sur la première branche de circulation du fluide réfrigérant et sur la première branche de circulation du liquide caloporteur,
- le deuxième bloc d'échange de chaleur est installé sur la deuxième branche de circulation du fluide réfrigérant et sur la deuxième branche de circulation du liquide caloporteur,
- la première branche de circulation du fluide réfrigérant et la deuxième branche de circulation du fluide réfrigérant sont ménagées parallèlement entre un premier point du circuit de fluide réfrigérant et un deuxième point du circuit de fluide réfrigérant, l'un quelconque au moins du premier point du circuit de fluide réfrigérant et du deuxième point du circuit de fluide réfrigérant étant équipé d'un premier organe de contrôle d'une alimentation en un fluide réfrigérant des blocs d'échange de chaleur de l'échangeur de chaleur fluide réfrigérant / liquide caloporteur,
- le premier organe de contrôle est par exemple une vanne trois-voies ou tout autre moyen de contrôle autorisant ou interdisant une alimentation en fluide réfrigérant de la première branche de circulation du fluide réfrigérant et/ou de la deuxième branche de circulation du fluide réfrigérant,
- la première branche de circulation du liquide caloporteur et la deuxième branche de circulation du liquide caloporteur sont ménagées parallèlement entre un premier point du circuit de liquide caloporteur et un deuxième point du circuit de liquide caloporteur, l'un quelconque au moins du premier point du circuit de liquide caloporteur et du deuxième point du circuit de liquide caloporteur étant équipé d'un deuxième organe de contrôle d'une alimentation en un liquide caloporteur des blocs d'échange de chaleur de l'échangeur de chaleur fluide réfrigérant / liquide caloporteur,
- le deuxième organe de contrôle est par exemple une vanne trois-voies ou tout autre moyen de contrôle autorisant ou interdisant une alimentation en liquide caloporteur de la première branche de circulation du liquide caloporteur et/ou de la deuxième branche de circulation du liquide caloporteur.

La présente invention a aussi pour objet un procédé de refroidissement d'un dispositif de stockage électrique d'un véhicule automobile au moyen d'une telle installation, dans lequel :
- le premier bloc d'échange de chaleur et le deuxième bloc d'échange de chaleur sont parcourus par le fluide réfrigérant et par le liquide caloporteur quand le dispositif de stockage électrique est en un mode de charge rapide, et
- seulement le premier bloc d'échange de chaleur est parcouru par le fluide réfrigérant et par le liquide caloporteur quand le dispositif de stockage électrique est en un mode de charge intermédiaire,
- seulement le deuxième bloc d'échange de chaleur est parcouru par le fluide réfrigérant et par le liquide caloporteur quand le dispositif de stockage électrique est en un mode de charge normal.

L'invention sera mieux comprise à la lecture de la description non limitative qui suit, rédigée au regard des dessins annexés, dans lesquels :
[Fig. 1] - la figure 1 représente une installation de la présente invention, selon un premier mode de refroidissement d'un composant.
[Fig. 2] - la figure 2 représente l'installation illustrée sur la figure 1, selon un deuxième mode de refroidissement du composant.
[Fig. 3] - la figure 3 représente l'installation illustrée sur les figures 1 et 2, selon un troisième mode de refroidissement du composant.
[Fig. 4] - la figure 4 représente en perspective un échangeur de chaleur fluide réfrigérant / liquide caloporteur de la présente invention qui est constitutif de l'installation illustrée sur les figures 1 à 3.
[Fig. 5] - la figure 5 illustre schématiquement l'échangeur de chaleur fluide réfrigérant / liquide caloporteur représenté sur la figure 4.
[Fig. 6] - la figure 6 représente une vue de face d'une plaque de séparation constitutive de l'échangeur de chaleur fluide réfrigérant / liquide caloporteur représentée sur les figures 4 et 5.
[Fig. 7] - la figure 7 représente une vue de profil de la plaque de séparation représentée sur la figure 6.
[Fig. 8] - la figure 8 illustre schématiquement une plaque d'échange de premier type constitutive d'une première variante de réalisation de l'échangeur de chaleur fluide réfrigérant / liquide caloporteur illustré sur les figures 4 et 5.
[Fig. 9] - la figure 9 illustre schématiquement une plaque d'échange de deuxième type constitutive d'une deuxième variante de réalisation de l'échangeur de chaleur fluide réfrigérant / liquide caloporteur illustré sur les figures 4 et 5.
[Fig. 10] - la figure 10 illustre schématiquement un échangeur de chaleur fluide réfrigérant / liquide caloporteur réalisé à partir de plaques illustrées sur la figure 8.
[Fig. 11] - la figure 11 illustre schématiquement un échangeur de chaleur fluide réfrigérant / liquide caloporteur réalisé à partir de plaques illustrées sur la figure 9.
[Fig. 12] - la figure 12 illustre schématiquement une plaque d'extrémité constitutive d'une forme de réalisation de l'échangeur de chaleur fluide réfrigérant / liquide caloporteur illustré sur les figures 10 ou 11.

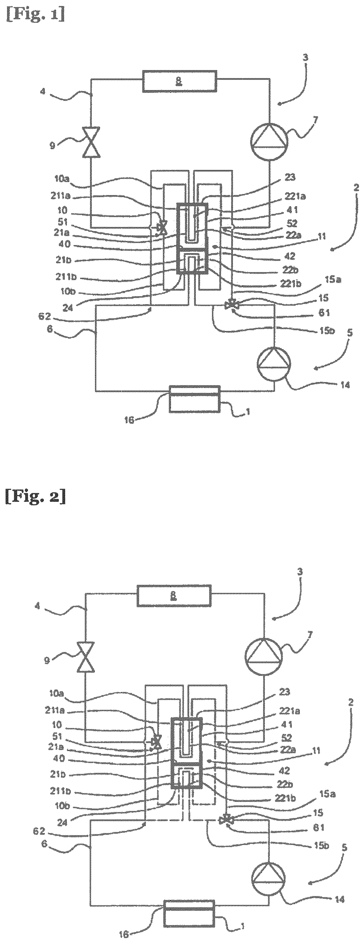

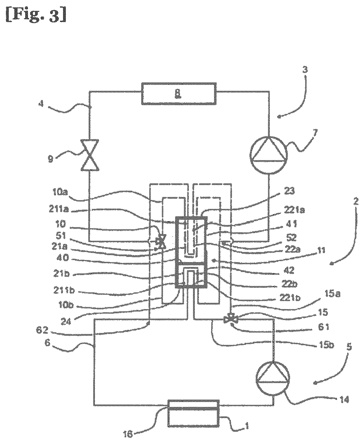

Sur les figures 1 à 3, un véhicule automobile est équipé d'un composant 1 qu'il convient de refroidir ou de réchauffer, par exemple pour optimiser son fonctionnement. Un tel composant 1 est par exemple un moteur électrique ou thermique destiné à propulser au moins partiellement le véhicule automobile, un dispositif de stockage électrique comprenant au moins une batterie électrique prévue pour stocker une énergie électrique, un dispositif de stockage de calories et/ou de frigories ou analogue. Le composant 1 est plus particulièrement un dispositif de stockage électrique comprenant au moins une batterie électrique, qui peut être rechargée notamment en mode charge rapide dans lequel un temps de charge est court et un courant électrique de charge est élevé, ou bien en mode charge normale dans lequel le temps de charge est long et le courant électrique de charge est faible. La présente invention vise à refroidir efficacement la batterie électrique, quel que soit son mode de charge : mode de charge rapide dans lequel la batterie électrique s'échauffe rapidement et fortement, tel que représenté sur la figure 1, ou bien mode de charge normale dans lequel la batterie électrique s'échauffe lentement et faiblement, tel que représenté sur la figure 2, ou bien encore en un mode intermédiaire dans lequel la batterie s'échauffe moyennement, notamment plus qu'en mode de charge normale et moins qu'en mode de charge rapide, tel que représenté sur la figure 3.

A cet effet, le véhicule automobile est équipé d'une installation 2 qui comprend un circuit de fluide réfrigérant 3 à l'intérieur duquel circule un fluide réfrigérant 4, dioxyde de carbone par exemple ou analogue, et un circuit de liquide caloporteur 5 à l'intérieur duquel circule un liquide caloporteur 6, eau glycolée notamment ou analogue. L'installation 2 est configurée pour modifier une température du composant 1, et notamment à refroidir le composant 1.

L'installation 2 comprend au moins un échangeur de chaleur fluide réfrigérant / liquide caloporteur 11 selon la présente invention. L'installation 2 est décrite ci-après pour mieux comprendre la présente invention mais les caractéristiques de l'installation 2 décrite ne sont nullement restrictives pour l'échangeur de chaleur fluide réfrigérant / liquide caloporteur 11 de la présente invention. Autrement dit, l'installation 2 est susceptible de présenter des caractéristiques structurelles distinctes et/ou des modalités de fonctionnement différentes que celles décrites sans que l'échangeur de chaleur fluide réfrigérant / liquide caloporteur 11 déroge aux règles de la présente invention.

Le circuit de fluide réfrigérant 3 comprend successivement un compresseur 7 pour comprimer le fluide réfrigérant 4, un échangeur fluide réfrigérant / air extérieur 8 pour refroidir le fluide réfrigérant 4 à pression constante, par exemple placé en face avant du véhicule automobile, un organe de détente 9 pour permettre une détente du fluide réfrigérant 4, un premier organe de contrôle 10 d'une alimentation en fluide réfrigérant 4 de l'échangeur de chaleur fluide réfrigérant / liquide caloporteur 11 et l'échangeur de chaleur fluide réfrigérant / liquide caloporteur 11 qui est agencé pour permettre un transfert thermique entre le fluide réfrigérant 4 et le liquide caloporteur 6.

Le premier organe de contrôle 10 est apte à diriger le fluide réfrigérant 4 en provenance de l'organe de détente 9 vers l'une quelconque au moins d'une première branche de circulation du fluide réfrigérant 10a et d'une deuxième branche de circulation du fluide réfrigérant 10b que comprend le circuit de fluide réfrigérant 3, la première branche de circulation du fluide réfrigérant 10a et la deuxième branche de circulation du fluide réfrigérant 10b étant agencées en parallèle l'une de l'autre. La première branche de circulation du fluide réfrigérant 10a et la deuxième branche de circulation du fluide réfrigérant 10b sont ménagées parallèlement entre un premier point du circuit de fluide réfrigérant 51 et un deuxième point du circuit de fluide réfrigérant 52. Le premier point du circuit de fluide réfrigérant 51 est situé entre l'organe de détente 9 et l'échangeur de chaleur fluide réfrigérant / liquide caloporteur 11 tandis que le deuxième point du circuit de fluide réfrigérant 52 est placé entre l'échangeur de chaleur fluide réfrigérant / liquide caloporteur 11 et le compresseur 7.

Le premier point du circuit de fluide réfrigérant 51 est équipé du premier organe de contrôle 10 de l'alimentation en fluide réfrigérant 4 de l'échangeur de chaleur fluide réfrigérant / liquide caloporteur 11. Selon une autre variante, le deuxième point du circuit de fluide réfrigérant 52 est équipé du premier organe de contrôle 10 de l'alimentation en fluide réfrigérant 4 de l'échangeur de chaleur fluide réfrigérant / liquide caloporteur 11. L'échangeur de chaleur fluide réfrigérant / liquide caloporteur 11 est constitutif de la première branche de circulation du fluide réfrigérant 10a et de la deuxième branche de circulation du fluide réfrigérant 10b.

Le premier organe de contrôle 10 comprend par exemple une vanne trois-voies ou tout autre moyen de contrôle autorisant ou interdisant une alimentation en fluide réfrigérant 4 de la première branche de circulation du fluide réfrigérant 10a et/ou de la deuxième branche de circulation du fluide réfrigérant 10b.

Le circuit de liquide caloporteur 5 comprend successivement une pompe 14 pour faire circuler le liquide caloporteur 6 à l'intérieur du circuit de liquide caloporteur 5, un deuxième organe de contrôle 15 d'une alimentation en liquide caloporteur 6 de l'échangeur de chaleur fluide réfrigérant / liquide caloporteur 11, l'échangeur de chaleur fluide réfrigérant / liquide caloporteur 11 qui est également constitutif du circuit de fluide réfrigérant 3, et un échangeur thermique 16, l'échangeur thermique 16 étant apte à modifier une température du composant 1, notamment par contact direct ménagé entre le composant 1 et l'échangeur thermique 16.

Le deuxième organe de contrôle 15 est apte à diriger le liquide caloporteur 6 en provenance de la pompe 14 vers l'une quelconque au moins d'une première branche de circulation du liquide caloporteur 15a et d'une deuxième branche de circulation du liquide caloporteur 15b que comprend le circuit de liquide caloporteur 5, la première branche de circulation du liquide caloporteur 15a et la deuxième branche de circulation du liquide caloporteur 15b étant agencées en parallèle l'une de l'autre. La première branche de circulation du liquide caloporteur 15a et la deuxième branche de circulation du liquide caloporteur 15b sont ménagées parallèlement entre un premier point du circuit de liquide caloporteur 61 et un deuxième point du circuit de liquide caloporteur 62. Le premier point du circuit de liquide caloporteur 61 est situé entre la pompe 14 et l'échangeur de chaleur fluide réfrigérant / liquide caloporteur 11 tandis que le deuxième point du circuit de liquide caloporteur 62 est placé entre l'échangeur de chaleur fluide réfrigérant / liquide caloporteur 11 et l'échangeur thermique 16.

Le premier point du circuit de liquide caloporteur 61 est équipé du deuxième organe de contrôle 15 d'une alimentation en liquide caloporteur 6 de l'échangeur de chaleur fluide réfrigérant / liquide caloporteur 11. Selon une autre variante, le deuxième point du circuit de liquide caloporteur 62 est équipé du deuxième organe de contrôle 15 d'une alimentation en liquide caloporteur 6 de l'échangeur de chaleur fluide réfrigérant / liquide caloporteur 11. L'échangeur de chaleur fluide réfrigérant / liquide caloporteur 11 est constitutif de la première branche de circulation du liquide caloporteur 15a et de la deuxième branche de circulation du liquide caloporteur 15b.

Le deuxième organe de contrôle 15 comprend par exemple une vanne trois-voies ou tout autre moyen de contrôle autorisant ou interdisant une alimentation en liquide caloporteur 6 de la première branche de circulation du liquide caloporteur 15a et/ou de la deuxième branche de circulation du liquide caloporteur 15b.

Pour être constitutif de la première branche de circulation du fluide réfrigérant 10a et de la deuxième branche de circulation du fluide réfrigérant 10b ainsi que de la première branche de circulation du liquide caloporteur 15a et de la deuxième branche de circulation du liquide caloporteur 15b, l'échangeur de chaleur fluide réfrigérant / liquide caloporteur 11 présente une structure et un agencement particulier.

En effet, l'échangeur de chaleur fluide réfrigérant / liquide caloporteur 11 comprend au moins deux chemins de circulation du fluide réfrigérant 21a, 21b et au moins deux chemins de circulation du liquide caloporteur 22a, 22b.

Plus particulièrement, l'échangeur de chaleur fluide réfrigérant / liquide caloporteur 11 comprend au moins un premier chemin de circulation du fluide réfrigérant 21a et un deuxième chemin de circulation du fluide réfrigérant 21b. Le premier chemin de circulation du fluide réfrigérant 21a et le deuxième chemin de circulation du fluide réfrigérant 21b sont agencés parallèlement l'un à l'autre à l'intérieur de l'échangeur de chaleur fluide réfrigérant / liquide caloporteur 11. Ainsi, le premier chemin de circulation du fluide réfrigérant 21a fait partie intégrante de la première branche de circulation du fluide réfrigérant 10a et le deuxième chemin de circulation du fluide réfrigérant 21b fait partie intégrante de la deuxième branche de circulation du fluide réfrigérant 10b.

De même, l'échangeur de chaleur fluide réfrigérant / liquide caloporteur 11 comprend au moins un premier chemin de circulation du liquide caloporteur 22a et un deuxième chemin de circulation du liquide caloporteur 22b. Le premier chemin de circulation du liquide caloporteur 22a et le deuxième chemin de circulation du liquide caloporteur 22b sont agencés parallèlement l'un à l'autre à l'intérieur de l'échangeur de chaleur fluide réfrigérant / liquide caloporteur 11. Ainsi, le premier chemin de circulation du liquide caloporteur 22a fait partie intégrante de la première branche de circulation du liquide caloporteur 15a et le deuxième chemin de circulation du liquide caloporteur 22b fait partie intégrante de la deuxième branche de circulation du liquide caloporteur 15b.

Le premier chemin de circulation du fluide réfrigérant 21a et le premier chemin de circulation du liquide caloporteur 22a sont agencés de manière à ce que le fluide réfrigérant 4 présent à l'intérieur du premier chemin de circulation du fluide réfrigérant 21a échange des calories avec le liquide caloporteur 6 présent à l'intérieur du premier chemin de circulation du liquide caloporteur 22a.

De même, le deuxième chemin de circulation du fluide réfrigérant 21b et le deuxième chemin de circulation du liquide caloporteur 22b sont agencés de manière à ce que le fluide réfrigérant 4 présent à l'intérieur du deuxième chemin de circulation du fluide réfrigérant 21b échange des calories avec le liquide caloporteur 6 présent à l'intérieur du deuxième chemin de circulation du liquide caloporteur 22b.

De préférence, le premier chemin de circulation du fluide réfrigérant 21a comporte plusieurs premiers canaux de circulation du fluide réfrigérant 211a et le premier chemin de circulation du liquide caloporteur 22a comporte plusieurs premiers canaux de circulation du liquide caloporteur 221a, un premier canal de circulation du fluide réfrigérant 211a étant interposé entre deux premiers canaux de circulation du liquide caloporteur 221a et un premier canal de circulation du liquide caloporteur 221a étant interposé entre deux premiers canaux de circulation du fluide réfrigérant 211a.

De préférence, le deuxième chemin de circulation du fluide réfrigérant 21b comporte plusieurs deuxièmes canaux de circulation du fluide réfrigérant 211b et le deuxième chemin de circulation du liquide caloporteur 22b comporte plusieurs deuxièmes canaux de circulation du liquide caloporteur 221b, un deuxième canal de circulation du fluide réfrigérant 211b étant interposé entre deux deuxièmes canaux de circulation du liquide caloporteur 221b et un deuxième canal de circulation du liquide caloporteur 221b étant interposé entre deux deuxièmes canaux de circulation du fluide réfrigérant 211b.

L'échangeur de chaleur fluide réfrigérant / liquide caloporteur 11 est un échangeur qui comprend un premier bloc d'échange de chaleur 41 s'étendant entre une première joue 23 et une plaque de séparation 40 et un deuxième bloc d'échange de chaleur 42 qui s'étend entre la plaque de séparation 40 et une deuxième joue 24. Autrement dit, l'échangeur de chaleur fluide réfrigérant / liquide caloporteur 11 est formé de deux blocs d'échange de chaleur 41, 42 qui sont étanches l'un avec l'autre et qui sont séparés et isolés fluidiquement l'un de l'autre par la plaque de séparation 40.

Le premier bloc d'échange de chaleur 41 loge le premier chemin de circulation du fluide réfrigérant 21a et le premier chemin de circulation du liquide caloporteur 22a tandis que le deuxième bloc d'échange de chaleur 42 loge le deuxième chemin de circulation du fluide réfrigérant 21b et le deuxième chemin de circulation du liquide caloporteur 22b. On comprend en cela que le premier chemin de circulation du fluide réfrigérant 21a et le premier chemin de circulation du liquide caloporteur 22a sont situés d'un côté de la plaque de séparation 40 et que le deuxième chemin de circulation du fluide réfrigérant 21b et le deuxième chemin de circulation du liquide caloporteur 22b sont situés de l'autre côté de la plaque de séparation 40.

L'échangeur de chaleur fluide réfrigérant / liquide caloporteur 11 est un échangeur de chaleur monobloc dans le sens où les blocs d'échange de chaleurs 41, 42 constitutifs de l'échangeur de chaleur fluide réfrigérant / liquide caloporteur 11 ne peuvent être dissociés l'un de l'autre qu'à partir d'une dislocation et/ou une destruction de l'un au moins des blocs d'échange de chaleurs 41, 42.

Selon une variante de réalisation, le premier bloc d'échange de chaleur 41 représente en volume deux tiers, à 10% près, d'un volume total de l'échangeur de chaleur fluide réfrigérant / liquide caloporteur 11 tandis que le deuxième bloc d'échange de chaleur 42 représente en volume un tiers, à 10% près, du volume total de l'échangeur de chaleur fluide réfrigérant / liquide caloporteur 11.

Sur la figure 1, le composant 1 est en mode de charge rapide et nécessite une puissance de refroidissement importante. Aussi, le premier organe de contrôle 10 autorise une circulation du fluide réfrigérant 4 vers la première branche de circulation du fluide réfrigérant 10a et vers la deuxième branche de circulation du fluide réfrigérant 10b, de telle sorte que l'ensemble du volume de l'échangeur de chaleur fluide réfrigérant / liquide caloporteur 11 est parcouru par le fluide réfrigérant 4. De même, le deuxième organe de contrôle 15 autorise une circulation du liquide caloporteur 6 vers la première branche de circulation du liquide caloporteur 15a et vers la deuxième branche de circulation du liquide caloporteur 15b, de telle sorte que l'ensemble du volume de l'échangeur de chaleur fluide réfrigérant / liquide caloporteur 11 est parcouru par le liquide caloporteur 6. Ces dispositions sont telles qu'une surface d'échange entre les chemins de circulation du fluide réfrigérant 21a, 21b et les chemins de circulation du liquide caloporteur 22a, 22b est la plus grande possible, afin d'optimiser un refroidissement du liquide caloporteur 6, et consécutivement du composant 1.

Sur la figure 2, le composant 1 est en mode de charge intermédiaire et nécessite une puissance de refroidissement moyenne, inférieure à la puissance de refroidissement importante. Aussi, le premier organe de contrôle 10 autorise une circulation du fluide réfrigérant 4 vers la première branche de circulation du fluide réfrigérant 10a et interdit une circulation du fluide réfrigérant 4 vers la deuxième branche de circulation du fluide réfrigérant 10b, de telle sorte que seul le premier bloc d'échange de chaleur 41 de l'échangeur de chaleur fluide réfrigérant / liquide caloporteur 11 est parcouru par le fluide réfrigérant 4. De même, le deuxième organe de contrôle 15 autorise une circulation du liquide caloporteur 6 vers la première branche de circulation du liquide caloporteur 15a et interdit une circulation du liquide caloporteur 6 vers la deuxième branche de circulation du liquide caloporteur 15b, de telle sorte que seul le premier bloc d'échange de chaleur 41 de l'échangeur de chaleur fluide réfrigérant / liquide caloporteur 11 est parcouru par le liquide caloporteur 6. Ces dispositions sont telles qu'une surface d'échange entre les chemins de circulation du fluide réfrigérant 21a, 21b et les chemins de circulation du liquide caloporteur 22a, 22b est moyenne, afin de refroidir le liquide caloporteur 6 selon le besoin de refroidissement du composant 1, qui est moindre que lorsque ce dernier est en mode charge rapide.

Sur la figure 3, le composant 1 est en mode de charge normal et nécessite une puissance de refroidissement faible, inférieure aux puissances de refroidissement importante et moyenne. Aussi, le premier organe de contrôle 10 interdit une circulation du fluide réfrigérant 4 vers la première branche de circulation du fluide réfrigérant 10a et autorise une circulation du fluide réfrigérant 4 vers la deuxième branche de circulation du fluide réfrigérant 10b, de telle sorte que seul le deuxième bloc d'échange de chaleur 42 de l'échangeur de chaleur fluide réfrigérant / liquide caloporteur 11 est parcouru par le fluide réfrigérant 4. De même, le deuxième organe de contrôle 15 interdit une circulation du liquide caloporteur 6 vers la première branche de circulation du liquide caloporteur 15a et autorise une circulation du liquide caloporteur 6 vers la deuxième branche de circulation du liquide caloporteur 15b, de telle sorte que seul le deuxième bloc d'échange de chaleur 42 de l'échangeur de chaleur fluide réfrigérant / liquide caloporteur 11 est parcouru par le liquide caloporteur 6. Ces dispositions sont telles qu'une surface d'échange entre les chemins de circulation du fluide réfrigérant 21a, 21b et les chemins de circulation du liquide caloporteur 22a, 22b est minimale, afin de refroidir le liquide caloporteur 6 selon le besoin de refroidissement du composant 1, qui est moindre que lorsque ce dernier est en mode charge rapide ou intermédiaire.

Ces dispositions sont telles que l'échangeur de chaleur fluide réfrigérant / liquide caloporteur 11 ainsi configuré et associé au premier organe de contrôle 10 et au deuxième organe de contrôle 15 est apte à fournir efficacement et rapidement une puissance de refroidissement adaptée en fonction des modalités de fonctionnement du composant 1.

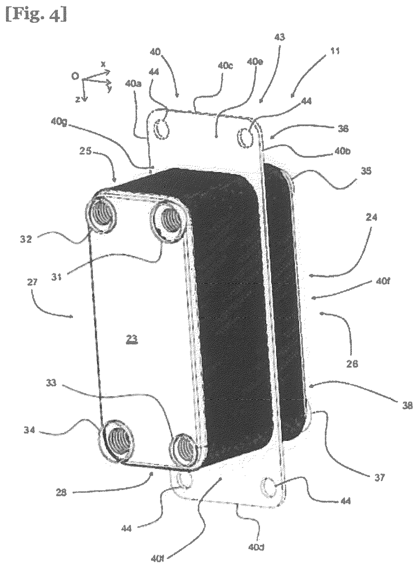

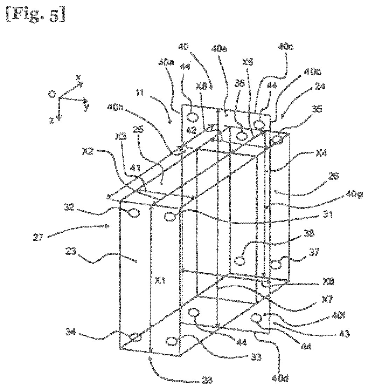

Sur les figures 4 et 5, l'échangeur de chaleur fluide réfrigérant / liquide caloporteur 11 est représenté schématiquement dans un repère orthonormé Oxyz lié à l'échangeur de chaleur fluide réfrigérant / liquide caloporteur 11, dans lequel une direction Ox est une direction longitudinale, une direction Oy est une direction latérale et une direction Oz est une direction verticale. L'échangeur de chaleur fluide réfrigérant / liquide caloporteur 11 est globalement parallélépipédique et s'étend longitudinalement entre la première joue 23 et la deuxième joue 24 qui bordent longitudinalement l'échangeur de chaleur fluide réfrigérant / liquide caloporteur 11 et qui s'étendent chacune principalement à l'intérieur d'un plan parallèle au plan Oyz.

La première joue 23 est pourvue de quatre passages, dont un premier passage 31, un deuxième passage 32, un troisième passage 33 et un quatrième passage 34, qui sont préférentiellement circulaires. On comprend que le premier passage 31, le deuxième passage 32, le troisième passage 33 et le quatrième passage 34 sont par exemple chacun formé d'un orifice pour permettre une circulation du fluide réfrigérant 4 et/ou du liquide caloporteur 6 à travers la première joue 23.

Le premier passage 31 et le deuxième passage 32 sont alignés selon une direction parallèle à la direction Oy et sont situés à proximité d'un premier côté 25 de l'échangeur de chaleur fluide réfrigérant / liquide caloporteur 11, parallèle au plan Oxy. Le premier passage 31 est situé à proximité d'un premier flanc 26 de l'échangeur de chaleur fluide réfrigérant / liquide caloporteur 11, le premier flanc 26 s'étendant dans un plan parallèle au plan Oxz. Le deuxième passage 32 est situé à proximité d'un deuxième flanc 27 de l'échangeur de chaleur fluide réfrigérant / liquide caloporteur 11, le deuxième flanc 27 s'étendant dans un plan parallèle au plan Oxz. Le premier flanc 26 et le deuxième flanc 27 bordent latéralement l'échangeur de chaleur fluide réfrigérant / liquide caloporteur 11.

Le troisième passage 33 et le quatrième passage 34 sont alignés selon une direction parallèle à la direction Oy et sont situés à proximité d'un deuxième côté 28 de l'échangeur de chaleur fluide réfrigérant / liquide caloporteur 11, parallèle au plan Oxy. Le deuxième côté 28 et le premier côté 25 bordent verticalement l'échangeur de chaleur fluide réfrigérant / liquide caloporteur 11. Le troisième passage 33 est situé à proximité du premier flanc 26 de l'échangeur de chaleur fluide réfrigérant / liquide caloporteur 11. Le quatrième passage 34 est situé à proximité du deuxième flanc 27 de l'échangeur de chaleur fluide réfrigérant / liquide caloporteur 11.

Le premier passage 31, le deuxième passage 32, le troisième passage 33 et le quatrième passage 34 sont disposés à des angles respectifs de la première joue 23 qui est globalement rectangulaire.

Sur la figure 5 plus particulièrement, la deuxième joue 24 est pourvue de quatre passages, dont un cinquième passage 35, un sixième passage 36, un septième passage 37 et un huitième passage 38, qui sont préférentiellement circulaires. On comprend que le cinquième passage 35, le sixième passage 36, le septième passage 37 et le huitième passage 38 sont par exemple chacun formé d'un orifice pour permettre une circulation du fluide réfrigérant 4 et/ou du liquide caloporteur 6 à travers la deuxième joue 24.

Le cinquième passage 35 et le sixième passage 36 sont alignés selon une direction parallèle à la direction Oy et sont situés à proximité d'un premier côté 25 de l'échangeur de chaleur fluide réfrigérant / liquide caloporteur 11, parallèle au plan Oxy. Le cinquième passage 35 est situé à proximité du premier flanc 26 de l'échangeur de chaleur fluide réfrigérant / liquide caloporteur 11. Le sixième passage 36 est situé à proximité du deuxième flanc 27 de l'échangeur de chaleur fluide réfrigérant / liquide caloporteur 11.

Le septième passage 37 et le huitième passage 38 sont alignés selon une direction parallèle à la direction Oy et sont situés à proximité du deuxième côté 28 de l'échangeur de chaleur fluide réfrigérant / liquide caloporteur 11. Le septième passage 37 est situé à proximité du premier flanc 26 de l'échangeur de chaleur fluide réfrigérant / liquide caloporteur 11. Le huitième passage 38 est situé à proximité du deuxième flanc 27 de l'échangeur de chaleur fluide réfrigérant / liquide caloporteur 11.

Le cinquième passage 35, le sixième passage 36, le septième passage 37 et le huitième passage 38 sont disposés à des angles respectifs de la deuxième joue 24, qui est globalement rectangulaire et de conformation sensiblement identique à celle de la première joue 23.

De préférence, le premier passage 31 et le cinquième passage 35 sont alignés selon une direction parallèle à la direction Ox, le deuxième passage 32 et le sixième passage 36 sont alignés selon une direction parallèle à la direction Ox, le troisième passage 33 et le septième passage 37 sont alignés selon une direction parallèle à la direction Ox, et le quatrième passage 34 et le huitième passage 38 sont alignés selon une direction parallèle à la direction Ox.

Le premier bloc d'échange 41 est globalement parallélépipédique et s'étend selon une première hauteur de bloc X1 prise entre le premier côté 25 et le deuxième côté 28 parallèlement à l'axe Oz. Le premier bloc d'échange 41 s'étend selon une première longueur de bloc X2 prise entre la première joue 23 et la plaque de séparation 40 parallèlement à l'axe Ox. Le premier bloc d'échange 41 s'étend selon une première largeur de bloc X3 prise entre le premier flanc 26 et le deuxième flanc 27 parallèlement à l'axe Oy.

Le deuxième bloc d'échange 42 est globalement parallélépipédique et s'étend selon une deuxième hauteur de bloc X4 prise entre le premier côté 25 et le deuxième côté 28 parallèlement à l'axe Oz. Le premier bloc d'échange 41 s'étend selon une deuxième longueur de bloc X5 prise entre la plaque de séparation 40 et la deuxième joue 24 parallèlement à l'axe Ox. Le premier bloc d'échange 41 s'étend selon une deuxième largeur de bloc X6 prise entre le premier flanc 26 et le deuxième flanc 27 parallèlement à l'axe Oy.

De préférence, la première hauteur de bloc X1 et la deuxième hauteur de bloc X4 sont égales, aux tolérances de fabrication près, la première longueur de bloc X2 est le double de la deuxième longueur de bloc X5, aux tolérances de fabrication près, et la première largeur de bloc X3 et la deuxième largeur de bloc X6 sont égales, aux tolérances de fabrication près.

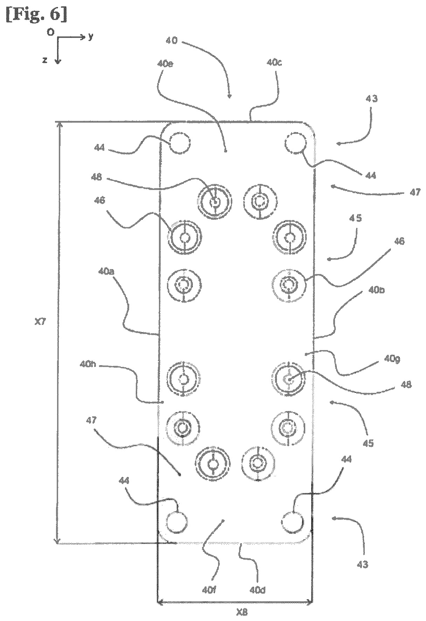

Sur la figure 6, la plaque de séparation 40 est globalement rectangulaire. La plaque de séparation 40 s'étend entre un premier rebord latéral 40a et un deuxième rebord latéral 40b qui sont parallèles à l'axe Oz, et s'étend entre un premier rebord transversal 40c et un deuxième rebord transversal 40d qui sont parallèles à l'axe Oy. La plaque de séparation 40 s'étend selon une hauteur de plaque X7 prise entre le premier rebord transversal 40c et le deuxième rebord transversal 40d parallèlement à l'axe Oz. La plaque de séparation 40 s'étend selon une largeur de plaque X8 prise entre le premier rebord latéral 40a et le deuxième rebord latéral 40b parallèlement à l'axe Oy.

La hauteur de plaque X7 est strictement supérieure à la première hauteur de bloc X1 et à la deuxième hauteur de bloc X4, de telle sorte que la plaque de séparation 40 émerge au-delà du premier côté 25 et du deuxième côté 28. Autrement dit, la plaque de séparation 40 comprend une première zone 40e qui surplombe le premier côté 25 et une deuxième zone 40f qui surplombe le deuxième côté 28.

La largeur de plaque X8 est strictement supérieure à la première largeur de bloc X3 et à la deuxième largeur de bloc X6, de telle sorte que la plaque de séparation 40 émerge au-delà du premier flanc 26 et du deuxième flanc 27. Autrement dit, la plaque de séparation 40 comprend une troisième zone 40g qui surplombe le premier flanc 26 et une quatrième zone 40h qui surplombe le deuxième flanc 27.

La plaque de séparation 40 est pourvue de moyens de fixation 43 qui équipent l'une quelconque au moins des zones 40e, 40f, 40g, 40h que la plaque de séparation 40 comprend. Les moyens de fixations 43 sont prévues pour permettre une implantation de l'échangeur de chaleur fluide réfrigérant / liquide caloporteur 11 sur un support que comprend le véhicule automobile, tel qu'un élément d'un châssis du véhicule automobile ou analogue. De préférence, les moyens de fixation 43 comprennent au moins une ouverture 44, et préférentiellement quatre ouvertures 44 réparties aux angles de la plaque de séparation 40, ces ouvertures 44 étant aptes à recevoir des boulons de fixation ou analogues.

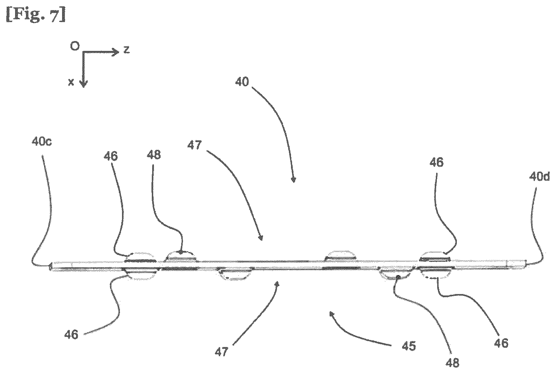

Sur les figures 6 et 7, la plaque de séparation 40 est pourvue de moyens de centrage 45 du premier bloc d'échange de chaleur 41 et du deuxième bloc d'échange de chaleur 42. Les moyens de centrage 45 sont destinés à positionner le premier bloc d'échange de chaleur 41 et le deuxième bloc d'échange de chaleur 42 de part et d'autre de la plaque de séparation en ménageant les zones 40e, 40f, 40g, 40h, qui bordent et entourent conjointement le premier bloc d'échange de chaleur 41 et le deuxième bloc d'échange de chaleur 42. Les moyens de centrage 45 comprennent une pluralité de bossages 46 qui sont répartis sur chacune des faces 47 de la plaque de séparation 40. Les bossages 46 sont préférentiellement répartis en bordure des zones 40e, 40f, 40g, 40h de la plaque de séparation que les bossages 46 délimitent au moins partiellement. Chaque bossage 46 est par exemple agencé sensiblement en un demi-ovoïde, notamment obtenu par emboutissage de la plaque de séparation 40. Chaque bossage 46 comprend un sommet 48 qui est destiné à venir en contact contre le premier bloc d'échange de chaleur 41 ou le deuxième bloc d'échange de chaleur 42, afin d'être brasé avec celui-ci.

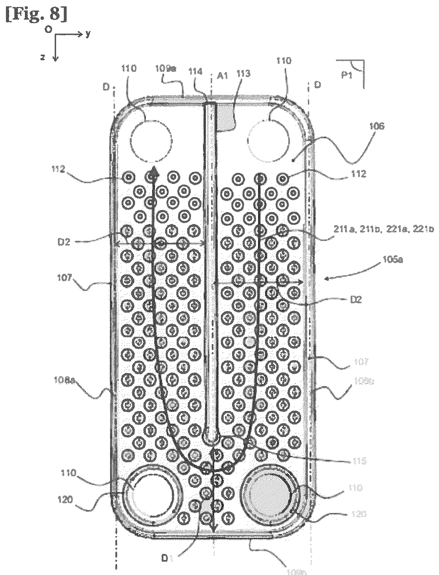

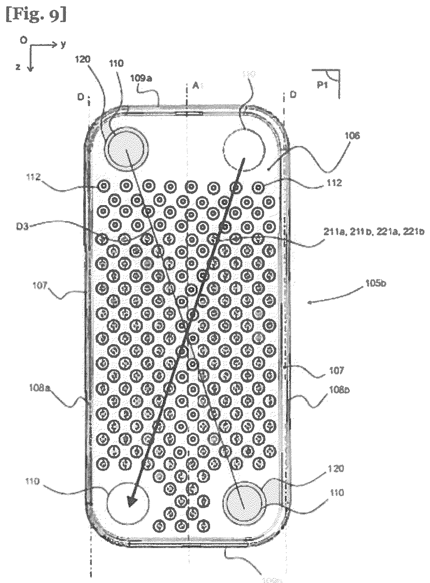

L'échangeur de chaleur fluide réfrigérant / liquide caloporteur 11 est un échangeur à plaques qui comprend la première joue 23, la deuxième joue 24, la plaque de séparation 40 et une pluralité de plaques d'échange de premier type 105a, telle que la plaque d'échange de premier type 105a illustrée sur la figure 8, ou bien une pluralité de plaques d'échange de deuxième type 105b, telle que la plaque d'échange de deuxième type 105b illustrée sur la figure 9.

Sur les figures 8 et 9, chaque plaque d'échange 105a, 105b indifféremment plaque d'échange de premier type 105a illustrée sur la figure 8 ou bien plaque d'échange de deuxième type 105b illustrée sur la figure 9, s'étend principalement selon un axe d'allongement A1. Chaque plaque d'échange 105a, 105b comprend un fond 106 et au moins un bord relevé 107 qui entoure le fond 106. Autrement dit, le bord relevé 107 est ménagé à la périphérie du fond 106, qui s'étend à l'intérieur d'un plan de fond P1, et le bord relevé 107 entoure le fond 106. On comprend que chaque plaque d'échange 105a, 105b est agencée en une baignoire globalement rectangulaire, le fond de la baignoire étant constitué du fond 106 et les bords de la baignoire étant constitués du bord relevé 107. Plus particulièrement, le bord relevé 107 comprend deux bords relevés latéraux 108a, 108b ménagés en vis-à-vis l'un de l'autre et deux bords relevés transversaux 109a, 109b ménagés en vis-à-vis l'un de l'autre.

Chaque plaque d'échange 105a, 105b comprend quatre orifices 110, notamment circulaires, qui sont réparties deux-à-deux à chaque extrémité transversale de la plaque d'échange de premier type 105a, et plus particulièrement à chacun des angles du fond 106 de la plaque d'échange 105a, 105b. Deux de ces orifices 110 sont configurées pour communiquer avec un des chemins de circulation 21a, 21b, 22a, 22b ménagé d'un côté du fond 106 et les deux autres orifices 110 sont configurées pour communiquer avec un des chemins de circulation 21a, 21b, 22a, 22b ménagé d'un autre côté du fond 106.

Le fond 106 est pourvue d'une pluralité de protubérances 112 pour perturber une circulation du fluide réfrigérant 4 ou du liquide caloporteur 6 et améliorer un échange de chaleur entre le fluide réfrigérant 4 et le liquide caloporteur 6.

Pour former le premier bloc d'échange de chaleur 41 ou bien le deuxième bloc d'échange de chaleur 42, une pluralité de plaques d'échange 105a, 105b sont imbriquées l'une dans l'autre et en contact l'une avec l'autre au moins par l'intermédiaire de leurs bords relevés 107. Autrement dit, deux plaques d'échange 105a, 105b sont empilées l'une au-dessus de l'autre et ménagent entre elles un espace qui forme le canal de circulation 211a, 211b, 221a, 221b du fluide réfrigérant 4 ou du liquide caloporteur 6.

Sur la figure 8 qui illustre la plaque d'échange de premier type 105a, deux des orifices 110 ménagés à une même extrémité transversale de la plaque d'échange de premier type 105a sont chacun entourés par un collet 120, de sorte que ces orifices 110 cernés par ce collet 120 s'étendent dans un plan décalé par rapport au plan de fond P1, parallèle au plan Oyz, dans lequel s'inscrit le fond 106. Les deux autres orifices 110 situées à l'autre extrémité transversale de la plaque de premier type 105a s'étendent dans le plan de fond P1.

Le fond 106 comprend une nervure 113 qui est agencée pour que le canal de circulation 211a, 211b, 221a, 221b présente un profil en « U ». La nervure 113 est parallèle à une direction D d'élongation des bords relevés latéraux 108a, 108b, la direction D d'élongation des bords relevés latéraux 108a, 108b étant préférentiellement parallèle à l'axe d'allongement A1 de la plaque d'échange de premier type 105a. La nervure 113 s'étend entre une première extrémité 114 et une deuxième extrémité 115, la première extrémité 114 étant en contact avec le bord relevé 107, et préférentiellement en contact avec un premier bord relevé transversal 109a que comprend le bord relevé 107. La deuxième extrémité 115 est située à une première distance D1 non-nulle du bord relevé 107, la première distance D1 étant prise le long de l'axe d'allongement A1 entre la deuxième extrémité 115 et un deuxième bord relevé transversal 109b, opposé au premier bord relevé transversal 109a.

Ces dispositions sont telles que le canal de circulation 211a, 211b, 221a, 221b est conformé en un « U » dont les branches du « U » sont parallèles aux bords relevés latéraux 108a, 108b de la plaque d'échange de premier type 105a et sont séparées par la nervure 113, et dont la base du « U » jouxte le deuxième bord transversal 109b. La nervure 113 est ménagée à une égale deuxième distance D2 des deux bords latéraux 108a, 108b de la plaque d'échange de premier type 105a, la deuxième distance D2 étant mesurée entre la nervure 113, prise en son centre, et l'un des bords relevés latéraux 108a, 108b, perpendiculairement à l'axe d'allongement A1 de la plaque d'échange de premier type 105a.

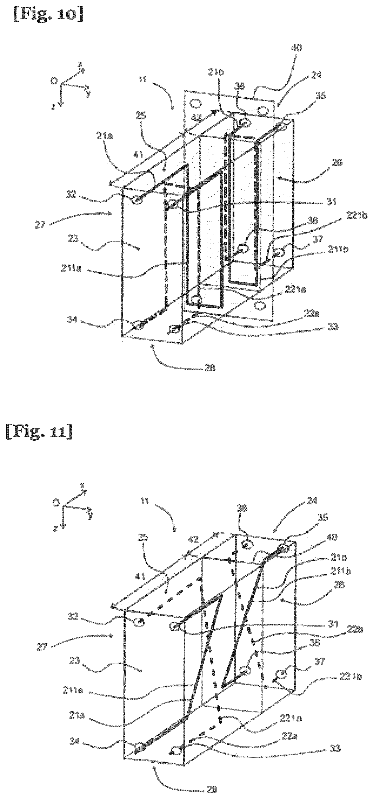

Il résulte de ces dispositions que l'échangeur de chaleur fluide réfrigérant / liquide caloporteur 11 obtenu à partir de telles plaques d'échange de premier type 105a est illustré sur la figure 10. Dans ce cas-là, le premier passage 31 et le deuxième passage 32 font partie intégrante du premier chemin de circulation du fluide réfrigérant 21a, qui est représenté en trait gras et continu. Le premier passage 31 est par exemple une admission du fluide réfrigérant 4 à l'intérieur du premier bloc d'échange de chaleur 41 de l'échangeur de chaleur fluide réfrigérant / liquide caloporteur 11 tandis que le deuxième passage 32 est une évacuation du fluide réfrigérant 4 hors du premier bloc d'échange de chaleur 41 de l'échangeur de chaleur fluide réfrigérant / liquide caloporteur 11. Le troisième passage 34 et le quatrième passage 34 font partie intégrante du premier chemin de circulation du liquide caloporteur 22a, qui est représenté en trait gras et pointillé. Le troisième passage 34 est par exemple une admission du liquide caloporteur 6 à l'intérieur du premier bloc d'échange de chaleur 41 de l'échangeur de chaleur fluide réfrigérant / liquide caloporteur 11 tandis que le quatrième passage 34 est une évacuation du liquide caloporteur 6 hors du premier bloc d'échange de chaleur 41 de l'échangeur de chaleur fluide réfrigérant / liquide caloporteur 11. On comprend en cela qu'à l'intérieur du premier bloc d'échange de chaleur 41, le premier chemin de circulation du fluide réfrigérant 21a est agencé en « U » et que le premier chemin de circulation du liquide caloporteur 22a est également agencé en « U ».

Le cinquième passage 35 et le sixième passage 36 font partie intégrante du deuxième chemin de circulation du fluide réfrigérant 21b, qui est représenté en trait gras et continu. Le cinquième passage 35 est par exemple une admission du fluide réfrigérant 4 à l'intérieur du deuxième bloc d'échange de chaleur 42 de l'échangeur de chaleur fluide réfrigérant / liquide caloporteur 11 tandis que le sixième passage 36 est une évacuation du fluide réfrigérant 4 hors du deuxième bloc d'échange de chaleur 42 de l'échangeur de chaleur fluide réfrigérant / liquide caloporteur 11. Le septième passage 37 et le huitième passage 38 font partie intégrante du deuxième chemin de circulation du liquide caloporteur 22b, qui est représenté en trait gras et pointillé. Le septième passage 37 est par exemple une admission du liquide caloporteur 6 à l'intérieur du deuxième bloc d'échange de chaleur 42 de l'échangeur de chaleur fluide réfrigérant / liquide caloporteur 11 tandis que le huitième passage 38 est une évacuation du liquide caloporteur 6 hors du deuxième bloc d'échange de chaleur 42 de l'échangeur de chaleur fluide réfrigérant / liquide caloporteur 11. On comprend en cela qu'à l'intérieur du deuxième bloc d'échange de chaleur 42, le deuxième chemin de circulation du fluide réfrigérant 21b est agencé en « U » et que le deuxième chemin de circulation du liquide caloporteur 22b est également agencé en « U ».

Sur la figure 9 qui illustre la plaque d'échange de deuxième type 105b, deux des orifices 110 ménagés selon une diagonale D3 de la plaque d'échange de deuxième type 105b sont entourés par un collet 120, de sorte que ces orifices 110 cernés par ce collet 120 s'étendent dans un plan décalé par rapport au plan de fond P1, parallèle au plan Oyz, dans lequel s'inscrit le fond 106. Les deux autres orifices 110 situés selon l'autre diagonale de la plaque d'échange de deuxième type 105b s'étendent dans le plan de fond P1. Ces dispositions sont telles que le canal de circulation 211a, 211b, 221a, 221b est conformé en un « I ».

Il résulte de ces dispositions que l'échangeur de chaleur fluide réfrigérant / liquide caloporteur 11 obtenu à partir de telles plaques d'échange de deuxième type 105b est illustré sur la figure 11. Dans ce cas-là, le premier passage 31 et le quatrième passage 34 font partie intégrante du premier chemin de circulation du fluide réfrigérant 21a, qui est représenté en trait gras et continu. Le premier passage 31 est par exemple une admission du fluide réfrigérant 4 à l'intérieur du premier bloc d'échange de chaleur 41 de l'échangeur de chaleur fluide réfrigérant / liquide caloporteur 11 tandis que le quatrième passage 34 est une évacuation du fluide réfrigérant 4 hors du premier bloc d'échange de chaleur 41 de l'échangeur de chaleur fluide réfrigérant / liquide caloporteur 11. Le deuxième passage 32 et le troisième passage 33 font partie intégrante du premier chemin de circulation du liquide caloporteur 22a, qui est représenté en trait gras et pointillé. Le deuxième passage 32 est par exemple une admission du liquide caloporteur 6 à l'intérieur du premier bloc d'échange de chaleur 41 de l'échangeur de chaleur fluide réfrigérant / liquide caloporteur 11 tandis que le troisième passage 33 est une évacuation du liquide caloporteur 6 hors du premier bloc d'échange de chaleur 41 de l'échangeur de chaleur fluide réfrigérant / liquide caloporteur 11. On comprend en cela qu'à l'intérieur du premier bloc d'échange de chaleur 41, le premier chemin de circulation du fluide réfrigérant 21a est agencé en « I » et que le premier chemin de circulation du liquide caloporteur 22a est également agencé en « I ».

Le cinquième passage 35 et le huitième passage 38 font partie intégrante du deuxième chemin de circulation du fluide réfrigérant 21b, qui est représenté en trait gras et continu. Le cinquième passage 35 est par exemple une admission du fluide réfrigérant 4 à l'intérieur du deuxième bloc d'échange de chaleur 42 de l'échangeur de chaleur fluide réfrigérant / liquide caloporteur 11 tandis que le huitième passage 38 est une évacuation du fluide réfrigérant 4 hors du deuxième bloc d'échange de chaleur 42 de l'échangeur de chaleur fluide réfrigérant / liquide caloporteur 11. Le sixième passage 36 et le septième passage 37 font partie intégrante du deuxième chemin de circulation du liquide caloporteur 22b, qui est représenté en trait gras et pointillé. Le sixième passage 36 est par exemple une admission du liquide caloporteur 6 à l'intérieur du deuxième bloc d'échange de chaleur 42 de l'échangeur de chaleur fluide réfrigérant / liquide caloporteur 11 tandis que le septième passage 37 est une évacuation du liquide caloporteur 6 hors du deuxième bloc d'échange de chaleur 42 de l'échangeur de chaleur fluide réfrigérant / liquide caloporteur 11. On comprend en cela qu'à l'intérieur du deuxième bloc d'échange de chaleur 42, le deuxième chemin de circulation du fluide réfrigérant 21b est agencé en « I » et que le deuxième chemin de circulation du liquide caloporteur 22b est également agencé en « I ».

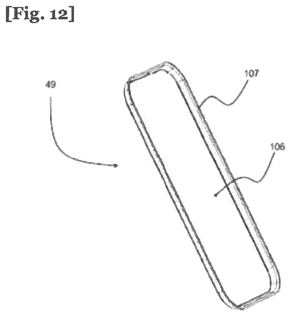

Selon une forme de réalisation de la présente invention, le premier bloc d'échange de chaleur 41 et/ou le deuxième bloc d'échange de chaleur 42 comprend une plaque d'extrémité 49 qui est interposée entre la plaque de séparation 40 et la plaque d'échange 105a, 105b la plus éloignée de la joue 23, 24 telle que la plaque d'extrémité représentée sur la figure 12. La plaque d'extrémité 49 est semblable à une plaque d'échange à l'exception notable que la plaque d'extrémité 49 est exempte d'orifice 110, de protubérance 112 et de rainure 113. La plaque d'extrémité 49 est toutefois conformé en cuvette et comporte un bord relevé 107 qui entoure un fond 106. Le bord relevé 107 de la plaque d'extrémité 49 est notamment destiné à venir en butée contre les bossages 46 de la plaque de séparation 40. Le fond 106 de la plaque d'extrémité 49 est notamment destiné à venir en contact avec le sommet 48 de chaque bossage 46 pour permettre un brasage de ces éléments entre eux.

L'ensemble de ces dispositions est tel qu'un procédé de refroidissement selon la présente invention du composant 1 au moyen de l'installation 2 précédemment décrite permet de refroidir le composant 1, selon trois modalités appropriées, selon l'état de charge du dispositif de stockage électrique 1, et notamment à partir d'un choix d'activation du premier organe de contrôle 10 et/ou du deuxième organe de contrôle 15 dans lequel :
- le premier bloc d'échange de chaleur 41 et le deuxième bloc d'échange de chaleur 42 sont parcourus par le fluide réfrigérant 4 et par le liquide caloporteur 6 quand le composant 1 est placé dans un mode de charge rapide, et
- seulement le premier bloc d'échange de chaleur 41 est parcouru par le fluide réfrigérant et par le liquide caloporteur 6 quand le composant 1 est placé dans un mode de charge intermédiaire,
- seulement le deuxième bloc d'échange de chaleur 42 est parcouru par le fluide réfrigérant et par le liquide caloporteur 6 quand le composant 1 est placé dans un mode de charge normal.

## Revendications

1. Echangeur de chaleur fluide réfrigérant / liquide caloporteur (11) dans lequel l'échangeur de chaleur fluide réfrigérant / liquide caloporteur est un échangeur de chaleur fluide réfrigérant / liquide caloporteur monobloc (11) comprenant au moins deux blocs d'échange de chaleur (41, 42), dont un premier bloc d'échange de chaleur (41) comportant un premier chemin de circulation d'un fluide réfrigérant (21a) et un premier chemin de circulation d'un liquide caloporteur (22a), et un deuxième bloc d'échange de chaleur (42) comportant un deuxième chemin de circulation du fluide réfrigérant (21b) et un deuxième chemin de circulation du liquide caloporteur (22b), les blocs d'échange de chaleur (41, 42) étant joints par l'intermédiaire d'une plaque de séparation (40), ladite plaque de séparation (40) étant équipée de moyens de fixation (43) de l'échangeur de chaleur fluide réfrigérant / liquide caloporteur (11) **caractérisé en ce que** les deux blocs d'échange de chaleur (41, 42) sont étanches l'un par rapport à l'autre, la plaque de séparation (40) isolant fluidiquement le premier bloc d'échange de chaleur (41) du deuxième bloc d'échange de chaleur (42).

2. Echangeur de chaleur fluide réfrigérant / liquide caloporteur (11) selon la revendication 1, dans lequel le premier bloc d'échange de chaleur (41) et le deuxième bloc d'échange de chaleur (42) sont longitudinalement aboutés par l'intermédiaire de la plaque de séparation (40).

3. Echangeur de chaleur fluide réfrigérant / liquide caloporteur (11) selon l'une quelconque des revendications précédentes, dans lequel la plaque de séparation (40) est équipée de moyens de centrage (45) du premier bloc d'échange de chaleur (41) et du deuxième bloc d'échange de chaleur (42) sur la plaque de séparation (40).

4. Echangeur de chaleur fluide réfrigérant / liquide caloporteur (11) selon l'une quelconque des revendications précédentes, dans lequel l'échangeur de chaleur fluide réfrigérant / liquide caloporteur (11) s'étend longitudinalement entre une première joue (23) et une deuxième joue (24), la première joue (23) étant pourvue de quatre passages (31, 32, 33, 34), dont un premier passage (31), un deuxième passage (32), un troisième passage (33) et un quatrième passage (34), et la deuxième joue (24) étant pourvue de quatre passages (35, 36, 37, 38), dont un cinquième passage (35), un sixième passage (36), un septième passage (37) et un huitième passage (38).

5. Echangeur de chaleur fluide réfrigérant / liquide caloporteur (11) selon la revendication 4, dans lequel le premier passage (31) et le deuxième passage (32) sont constitutifs du premier chemin de circulation du fluide réfrigérant (21a), le troisième passage (33) et le quatrième passage (34) sont constitutifs du premier chemin de circulation du liquide caloporteur (22a), le cinquième passage (35) et le sixième passage (36) sont constitutifs du deuxième chemin de circulation du fluide réfrigérant (21b), et le septième passage (37) et le huitième passage (38) sont constitutifs du deuxième chemin de circulation du liquide caloporteur (22b).

6. Echangeur de chaleur fluide réfrigérant / liquide caloporteur (11) selon la revendication 4, dans lequel le premier passage (31) et le quatrième passage (34) sont constitutifs du premier chemin de circulation du fluide réfrigérant (21a), le deuxième passage (32) et le troisième passage (33) sont constitutifs du premier chemin de circulation du liquide caloporteur (22a), le cinquième passage (35) et le huitième passage (38) sont constitutifs du deuxième chemin de circulation du fluide réfrigérant (21b), et le sixième passage (36) et le septième passage (37) sont constitutifs du deuxième chemin de circulation du liquide caloporteur (22b).

7. Echangeur de chaleur fluide réfrigérant / liquide caloporteur (11) selon l'une quelconque des revendications 1 à 6, dans lequel l'échangeur de chaleur fluide réfrigérant / liquide caloporteur (11) est un échangeur à plaques comprenant la plaque de séparation (40) et des plaques d'échange (105a, 105b) qui sont assemblées entre elles par brasage.

8. Echangeur de chaleur fluide réfrigérant / liquide caloporteur (11) selon la revendication 7, dans lequel les plaques d'échange (105a, 105b) constitutives du premier bloc d'échange de chaleur (41) sont identiques aux plaques d'échange (105a, 105b) constitutives du deuxième bloc d'échange de chaleur (42).

9. Installation (2) de traitement thermique d'un composant équipant un véhicule automobile, l'installation (2) comprenant un circuit de fluide réfrigérant (3), un circuit de liquide caloporteur (5) et un échangeur de chaleur fluide réfrigérant / liquide caloporteur (11) selon l'une quelconque des revendications 6 à 8, le circuit de fluide réfrigérant (3) comprenant une première branche de circulation du fluide réfrigérant (10a) et une deuxième branche de circulation du fluide réfrigérant (10b) qui sont agencées en parallèle l'une de l'autre, le circuit de liquide caloporteur (5) comprenant une première branche de circulation du liquide caloporteur (15a) et une deuxième branche de circulation du liquide caloporteur (15b) qui sont agencées en parallèle l'une de l'autre, dans laquelle le premier chemin de circulation du fluide réfrigérant (21a) est constitutif de la première branche de circulation du fluide réfrigérant (10a), le premier chemin de circulation du liquide caloporteur (22a) est constitutif de la première branche de circulation du liquide caloporteur (15a), le deuxième chemin de circulation du fluide réfrigérant (21b) est constitutif de la deuxième branche de circulation du fluide réfrigérant (10b) et le deuxième chemin de circulation du liquide caloporteur (22b) est constitutif de la deuxième branche de circulation du liquide caloporteur (15b).

10. Procédé de refroidissement d'un dispositif de stockage électrique (1) d'un véhicule automobile au moyen d'une installation (2) selon la revendication 9, dans lequel :
- le premier bloc d'échange de chaleur (41) et le deuxième bloc d'échange de chaleur (42) sont parcourus par le fluide réfrigérant (4) et par le liquide caloporteur (6) quand le dispositif de stockage électrique (1) est en un mode de charge rapide, et
- seulement le premier bloc d'échange de chaleur (41) est parcouru par le fluide réfrigérant (4) et par le liquide caloporteur (6) quand le dispositif de stockage électrique (1) est en un mode de charge intermédiaire,
- seulement le deuxième bloc d'échange de chaleur (42) est parcouru par le fluide réfrigérant (4) et par le liquide caloporteur (6) quand le dispositif de stockage électrique (1) est en un mode de charge normal.

## Patentansprüche

1. Wärmetauscher Kältemittel/Wärmeträgerflüssigkeit (11), wobei der Wärmetauscher Kältemittel/Wärmeträgerflüssigkeit ein Monoblockwärmetauscher Kältemittel/Wärmeträgerflüssigkeit (11) ist, der mindestens zwei Wärmetauscherblöcke (41, 42) umfasst, von denen ein erster Wärmetauscherblock (41) einen ersten Zirkulationsweg eines Kältemittels (21a) und einen ersten Zirkulationsweg einer Wärmeträgerflüssigkeit (22a) aufweist und ein zweiter Wärmetauscherblock (42) einen zweiten Zirkulationsweg des Kältemittels (21b) und einen zweiten Zirkulationsweg der Wärmeträgerflüssigkeit (22b) aufweist, wobei die Wärmetauscherblöcke (41, 42) über eine Trennplatte (40) verbunden sind, wobei die Trennplatte (40) mit Mitteln zur Befestigung (43) des Wärmetauschers Kältemittel/Wärmeträgerflüssigkeit (11) ausgestattet ist,
**dadurch gekennzeichnet, dass** die zwei Wärmetauscherblöcke (41, 42) relativ zueinander dicht sind, wobei die Trennplatte (40) den ersten Wärmetauscherblock (41) vom zweiten Wärmetauscherblock (42) fluidisch isoliert.

2. Wärmetauscher Kältemittel/Wärmeträgerflüssigkeit (11) nach Anspruch 1, wobei der erste Wärmetauscherblock (41) und der zweite Wärmetauscherblock (42) über die Trennplatte (40) in Längsrichtung aneinanderstoßen.

3. Wärmetauscher Kältemittel/Wärmeträgerflüssigkeit (11) nach einem der vorhergehenden Ansprüche, wobei die Trennplatte (40) mit Mitteln zur Zentrierung (45) des ersten Wärmetauscherblocks (41) und des zweiten Wärmetauscherblocks (42) auf der Trennplatte (40) ausgestattet ist.

4. Wärmetauscher Kältemittel/Wärmeträgerflüssigkeit (11) nach einem der vorhergehenden Ansprüche, wobei sich der Wärmetauscher Kältemittel/Wärmeträgerflüssigkeit (11) in Längsrichtung zwischen einer ersten Seitenwange (23) und einer zweiten Seitenwange (24) erstreckt, wobei die erste Seitenwange (23) mit vier Durchlässen (31, 32, 33, 34) versehen ist, nämlich einem ersten Durchlass (31), einem zweiten Durchlass (32), einem dritten Durchlass (33) und einem vierten Durchlass (34), und die zweite Seitenwange (24) mit vier Durchlässen (35, 36, 37, 38) versehen ist, nämlich einem fünften Durchlass (35), einem sechsten Durchlass (36), einem siebenten Durchlass (37) und einem achten Durchlass (38).

5. Wärmetauscher Kältemittel/Wärmeträgerflüssigkeit (11) nach Anspruch 4, wobei der erste Durchlass (31) und der zweite Durchlass (32) Bestandteile des ersten Zirkulationsweges des Kältemittels (21a) sind, der dritte Durchlass (33) und der vierte Durchlass (34) Bestandteile des ersten Zirkulationsweges der Wärmeträgerflüssigkeit (22a) sind, der fünfte Durchlass (35) und der sechste Durchlass (36) Bestandteile des zweiten Zirkulationsweges des Kältemittels (21b) sind und der siebente Durchlass (37) und der achte Durchlass (38) Bestandteile des zweiten Zirkulationsweges der Wärmeträgerflüssigkeit (22b) sind.

6. Wärmetauscher Kältemittel/Wärmeträgerflüssigkeit (11) nach Anspruch 4, wobei der erste Durchlass (31) und der vierte Durchlass (34) Bestandteile des ersten Zirkulationsweges des Kältemittels (21a) sind, der zweite Durchlass (32) und der dritte Durchlass (33) Bestandteile des ersten Zirkulationsweges der Wärmeträgerflüssigkeit (22a) sind, der fünfte Durchlass (35) und der achte Durchlass (38) Bestandteile des zweiten Zirkulationsweges des Kältemittels (21b) sind und der sechste Durchlass (36) und der siebente Durchlass (37) Bestandteile des zweiten Zirkulationsweges der Wärmeträgerflüssigkeit (22b) sind.

7. Wärmetauscher Kältemittel/Wärmeträgerflüssigkeit (11) nach einem der Ansprüche 1 bis 6, wobei der Wärmetauscher Kältemittel/Wärmeträgerflüssigkeit (11) ein Plattenwärmetauscher ist, der die Trennplatte (40) und Wärmetauscherplatten (105a, 105b) umfasst, die durch Löten miteinander verbunden sind.

8. Wärmetauscher Kältemittel/Wärmeträgerflüssigkeit (11) nach Anspruch 7, wobei die Wärmetauscherplatten (105a, 105b), die Bestandteile des ersten Wärmetauscherblocks (41) sind, identisch mit den Wärmetauscherplatten (105a, 105b) sind, die Bestandteile des zweiten Wärmetauscherblocks (42) sind.

9. Anlage (2) zur Wärmebehandlung einer Komponente, mit der ein Kraftfahrzeug ausgestattet ist, wobei die Anlage (2) einen Kältemittelkreislauf (3), einen Wärmeträgerflüssigkeitskreislauf (5) und einen Wärmetauscher Kältemittel/Wärmeträgerflüssigkeit (11) nach einem der Ansprüche 6 bis 8 umfasst, wobei der Kältemittelkreislauf (3) einen ersten Zirkulationszweig des Kältemittels (10a) und einen zweiten Zirkulationszweig des Kältemittels (10b) umfasst, die parallel zueinander angeordnet sind, wobei der Wärmeträgerflüssigkeitskreislauf (5) einen ersten Zirkulationszweig der Wärmeträgerflüssigkeit (15a) und einen zweiten Zirkulationszweig der Wärmeträgerflüssigkeit (15b) umfasst, die parallel zueinander angeordnet sind, wobei der erste Zirkulationsweg des Kältemittels (21a) Bestandteil des ersten Zirkulationszweiges des Kältemittels (10a) ist, der erste Zirkulationsweg der Wärmeträgerflüssigkeit (22a) Bestandteil des ersten Zirkulationszweiges der Wärmeträgerflüssigkeit (15a) ist, der zweite Zirkulationsweg des Kältemittels (21b) Bestandteil des zweiten Zirkulationszweiges des Kältemittels (10b) ist und der zweite Zirkulationsweg der Wärmeträgerflüssigkeit (22b) Bestandteil des zweiten Zirkulationszweiges der Wärmeträgerflüssigkeit (15b) ist.

10. Verfahren zur Kühlung einer elektrischen Speichervorrichtung (1) eines Kraftfahrzeugs mittels einer Anlage (2) nach Anspruch 9, wobei:
- der erste Wärmetauscherblock (41) und der zweite Wärmetauscherblock (42) von dem Kältemittel (4) und von der Wärmeträgerflüssigkeit (6) durchströmt werden, wenn sich die elektrische Speichervorrichtung (1) in einem Schnelllademodus befindet, und
- nur der erste Wärmetauscherblock (41) von dem Kältemittel (4) und von der Wärmeträgerflüssigkeit (6) durchströmt wird, wenn sich die elektrische Speichervorrichtung (1) in einem Zwischenlademodus befindet,
- nur der zweite Wärmetauscherblock (42) von dem Kältemittel (4) und von der Wärmeträgerflüssigkeit (6) durchströmt wird, wenn sich die elektrische Speichervorrichtung (1) in einem normalen Lademodus befindet.

## Claims

1. Refrigerant/heat transfer liquid heat exchanger (11) in which the refrigerant/heat transfer liquid heat exchanger is a monoblock refrigerant/heat transfer liquid heat exchanger (11) comprising at least two heat exchange blocks (41, 42), including a first heat exchange block (41) comprising a first circulation path for a refrigerant (21a) and a first circulation path for a heat transfer liquid (22a), and a second heat exchange block (42) comprising a second circulation path for the refrigerant (21b) and a second circulation path for the heat transfer liquid (22b), the heat exchange blocks (41 , 42) being joined by means of a partition plate (40), said partition plate (40) being equipped with fixing means (43) for fixing the refrigerant/heat transfer liquid heat exchanger (11), **characterized in that** the two heat exchange blocks (41, 42) are sealed with respect to one another, the partition plate (40) fluidically isolating the first heat exchange block (41) from the second heat exchange block (42).

2. Refrigerant/heat transfer liquid heat exchanger (11) according to Claim 1, wherein the first heat exchange block (41) and the second heat exchange block (42) are butted longitudinally via the partition plate (40).

3. Refrigerant/heat transfer liquid heat exchanger (11) according to any one of the preceding claims, wherein the partition plate (40) is equipped with centring means (45) for centring the first heat exchange block (41) and the second heat exchange block (42) on the partition plate (40).

4. Refrigerant/heat transfer liquid heat exchanger (11) according to any one of the preceding claims, wherein the refrigerant/heat transfer liquid heat exchanger (11) extends longitudinally between a first cheek (23) and a second cheek (24), the first cheek (23) being provided with four passages (31, 32, 33, 34), including a first passage (31), a second passage (32), a third passage (33) and a fourth passage (34), and the second cheek (24) being provided with four passages (35, 36, 37, 38), including a fifth passage (35), a sixth passage (36), a seventh passage (37) and an eighth passage (38).

5. Refrigerant/heat transfer liquid heat exchanger (11) according to Claim 4, wherein the first passage (31) and the second passage (32) constitute the first circulation path for the refrigerant (21a), the third passage (33) and the fourth passage (34) constitute the first circulation path for the heat transfer liquid (22a), the fifth passage (35) and the sixth passage (36) constitute the second circulation path for the refrigerant (21b), and the seventh passage (37) and the eighth passage (38) constitute the second circulation path for the heat transfer liquid (22b).

6. Refrigerant/heat transfer liquid heat exchanger (11) according to Claim 4, wherein the first passage (31) and the fourth passage (34) constitute the first circulation path for the refrigerant (21a), the second passage (32) and the third passage (33) constitute the first circulation path for the heat transfer liquid (22a), the fifth passage (35) and the eighth passage (38) constitute the second circulation path for the refrigerant (21b), and the sixth passage (36) and the seventh passage (37) constitute the second circulation path for the heat transfer liquid (22b).

7. Refrigerant/heat transfer liquid heat exchanger (11) according to any one of Claims 1 to 6, wherein the refrigerant/heat transfer liquid heat exchanger (11) is a plate exchanger comprising the partition plate (40) and exchange plates (105a, 105b) which are assembled together by brazing.

8. Refrigerant/heat transfer liquid heat exchanger (11) according to Claim 7, wherein the exchange plates (105a, 105b) constituting the first heat exchange block (41) are identical to the exchange plates (105a, 105b) constituting the second heat exchange block (42).

9. Installation (2) for thermal treatment of a component equipping a motor vehicle, the installation (2) comprising a refrigerant circuit (3), a heat transfer liquid circuit (5) and a refrigerant/heat transfer liquid heat exchanger (11) according to any one of Claims 6 to 8, the refrigerant circuit (3) comprising a first refrigerant circulation branch (10a) and a second refrigerant circulation branch (10b) that are arranged parallel to each other, the heat transfer liquid circuit (5) comprising a first heat transfer liquid circulation branch (15a) and a second heat transfer liquid circulation branch (15b) that are arranged parallel to each other, wherein the first refrigerant circulation path (21a) constitutes the first refrigerant circulation branch (10a), the first heat transfer liquid circulation path (22a) constitutes the first heat transfer liquid circulation branch (15a), the second refrigerant circulation path (21b) constitutes the second refrigerant circulation branch (10b) and the second heat transfer liquid circulation path (22b) constitutes the second heat transfer liquid circulation branch (15b).

10. Method of cooling an electrical storage device (1) of a motor vehicle by means of an installation (2) according to Claim 9, wherein:
- the refrigerant (4) and the heat transfer liquid (6) travel through the first heat exchange block (41) and the second heat exchange block (42) when the electrical storage device (1) is in a rapid charging mode, and
- the refrigerant (4) and the heat transfer liquid (6) travel through only the first heat exchange block (41) when the electrical storage device (1) is in an intermediate charging mode,
- the refrigerant (4) and the heat transfer liquid (6) travel through only the second heat exchange block (42) when the electrical storage device (1) is in a normal charging mode.
